Europäisches Patentamt

European Patent Office

Office européen des brevets

(19)

(11) Veröffentlichungsnummer : **0 157 189**
**B1**

(12) **EUROPÄISCHE PATENTSCHRIFT**

(45) Veröffentlichungstag der Patentschrift :
09.11.88

(51) Int. Cl.⁴ : **H 04 L 11/20, H 04 Q 11/04**

(21) Anmeldenummer : 85102398.6

(22) Anmeldetag : 04.03.85

(54) Verfahren zur Verkehrskonzentrierung für paketorientierte Informationen insbesondere in einer dienstintegrierten digitalen Zeitmultiplex-Vermittlungsstelle.

(30) Priorität : 02.03.84 DE 3407809

(43) Veröffentlichungstag der Anmeldung :
09.10.85 Patentblatt 85/41

(45) Bekanntmachung des Hinweises auf die Patenterteilung : 09.11.88 Patentblatt 88/45

(84) Benannte Vertragsstaaten :
AT BE CH FR GB IT LI NL SE

(56) Entgegenhaltungen :
WO-A-83 /041 15
IEEE INTERNATIONAL CONFERENCE ON COMMUNI-CATIONS, 19.-22. Juni 1983, Boston, Massachusetts, US, Seiten 1389-1395 E6.5.1-E6.5.7, IEEE, US; K. FUNG et al.: "Integrated digital access design for ISDN"
IEEE GLOBAL TELECOMMUNICATIONS CONFE-RENCE, 29. November - 2. Dezember 1982, Band 2, Paper D2.3, Miami, US, Seiten 1-7, IEEE, US, B.W. MOORE et al.: "ISDN customer to network signalling D channel protocol level 1 aspects"
IEEE INTERNATIONAL CONFERENCE ON COMMUNI-CATIONS, 13.-17. Juni 1982, Band 3, Paper 5C.1, Philadelphia, US, Seiten 1-6, IEEE, US; T. TAKEMURA et al.: "A new channel protocol and inhouse network configuration"
INTERNATIONAL SYMPOSIUM ON SUBSCRIBER LOOPS AND SERVICES, 20.-24. September 1982, Toronto, CA, Seiten 66-70; K. W. WABER: "Considerations on customer access to the ISDN"
TELCOM REPORT, Band 6, Nr. 3, Juni 1983, Seiten 180-183, Passau, DE; G. SCHOLLMEIER: "Übertragungstechnik für den digitalen Teilnehmeranschluss im ISDN »

(73) Patentinhaber : Siemens Aktiengesellschaft Berlin und München
Wittelsbacherplatz 2
D-8000 München 2 (DE)

(72) Erfinder : Lechner, Robert, Dipl.-Ing.
Haidfeldstrasse 5
D-8156 Otterfing (DE)

### Beschreibung

Die Erfindung betrifft ein Verfahren zur Verkehrskonzentrierung von paketorientierten Informationen und Signalisierungsinformationen auf eine mit einer digitalen Zeitmultiplex-Vermittlungsstelle eines digitalen, insbesondere dienstintegrierten Zeitmultiplex-Fernmeldenetzes verbindende PCM-Zeitmultiplex-Leitung, die von vorwiegend gruppenweise über jeweils eine Informationsmultiplexleitung und jeweils wenigstens eine Steuermultiplexleitung an eine Verteilerschaltung angeschlossenen periphern Baueinheiten geliefert werden, wobei jeweils für die Dauer einer Informationsübertragung in einem Zeitschlitz auf der Informationsmultiplexleitung auf der Steuermultiplexleitung im selben Zeitschlitz ein diesen Zustand kennzeichnendes Signal auftritt.

Ein bekanntes Verfahren, das den Zugriff dezentraler, paketorientierte Daten liefernder Baueinheiten zu einer gemeinsamen Übertragungsleitung regelt, ist das sogenannte Polling-Verfahren. Es wird dabei von einer zentralen Verteilerschaltung aus an die peripheren Baueinheiten nacheinander ein Polling-Signal ausgesendet, durch das die betroffenen Baueinheiten aufgefordert sind, mit einer Nachrichtenübermittlung zu beginnen. Wenn eine aufgeforderte Baueinheit tatsächlich Informationen absetzen möchte, beginnt sie mit der Aussendung der Information, ist dies nicht der Fall, dann sendet sie entweder ein entsprechendes Quittungssignal an die zentrale Verteilerschaltung oder die zentrale Verteilerschaltung erkennt aus dem Fehlen einer Reaktion, daß keine Informationsaussendung beabsichtigt ist. Die Verteilerschaltung fordert dann in entsprechender Weise die nachfolgende periphere Baueinheit zur Informationsaaussendung auf.

Dieses Verfahren erfordert also einen dauernden Informationsaustausch zwischen zentraler Verteilerschaltung und dezentralen Baueinheiten, wozu bei einem bekannten dienstintegrierten Zeitmultiplex-Fernmeldenezt außer einer der Informationsübertragung dienenden Übertragungsleitung für n × 64 kbit/s-Basiskanäle gesonderte Abfrageleitungen zwischen den peripheren Baueinheiten und der zentralen Verteilerschaltung vorhanden sind. Das geschilderte Polling-Verfahren führt außerdem bei steigender Anzahl beteiligter Informationen aussendender und empfangender Einrichtungen zu immer größer werdenden Wartezeiten, in denen die gemeinsame Übertragungsleitung nicht im vollen Umfange ausgenutzt ist.

Bei einem anderen bekannten Verfahren zur Verkehrskonzentrierung wird von sendebereiten Einheiten das gemeinsame Übertragungsmedium, an das diese angeschlossen sind, auf das Vorhandensein einer Informationsübertragung überwacht und falls eine solche gerade stattfindet mit der Informationsaussendung gewartet, bis das Übertragungsmedium frei ist. Um die Wahrscheinlichkeit zu verringern, daß mehrere sendebereite Einrichtungen gleichzeitig und über längere Zeit hinweg auf das jeweils als frei erkannte Übertragungsmedium zugreifen, wobei es dann zu einer Kollision verschiedener Informationsübertragungen kommt, ist bei diesem Verfahren vorgesehen, daß den Sendebetrieb aufnehmende Einrichtungen die Verhältnisse auf dem Übertragungsmedium auf das Auftreten solcher Kollisionen überwachen und im Kollisionsfall ihren Sendebetrieb wieder einstellen. Der nachfolgende erneute Versuch eine freie Zeitspanne auf dem Übertragungsmedium zu finden, wird dann aber bei den einzelnen Einrichtungen, um die Wahrscheinlichkeit einer erneuten Kollision zu verringern, gemäß einer Zufallsfolge verzögert. Hinweise auf die vorerwähnten bekannten Verfahren finden sich in der internationalen Patentanmeldung WO-A-83/04 115.

Bei einem weiteren bekannten Verfahren wird ein Echokanal verwendet, über den von zentraler Stelle aus die von dezentralen Einrichtungen kommenden Nachrichten an diese zurückgesendet werden, um anzuzeigen, daß der Übertragungsweg frei ist. Dieser Echokanal muß allerdings eigens zu diesem Zweck eingerichtet werden.

Aufgrund der vorliegenden Erfindung ist es nun, ein Verfahren zur Verkehrskonzentrierung anzugeben, das die genannten Nachteile vermeidet und demnach einerseits ein gesondertes Abfrageleitungssystem überflüssig macht, andererseits die Wartezeiten vor der Informationsabgabe verringert und eine bessere Ausnutzung der gemeinsamen Übertragungsleitung gewährleistet.

Erfindungsgemäß wird diese Aufgabe unter Voraussetzung der eingangs genannten Verbindungsstruktur von peripheren Baueinheiten und zentraler Verteilerschaltung dadurch gelöst, daß die peripheren Baueinheiten im Falle eines Sendewunsches in einem ihnen jeweils zugeordneten Zeitabschnitt eines bestimmten Zeitschlitzes auf der Steuermultiplexleitung oder auf der Informationsmultiplexleitung oder sowohl auf der Steuermultiplexleitung als auch auf der Informationsmultiplexleitung, dort allerdings nicht notwendigerweise im selben Zeitabschnitt des bestimmten Zeitschlitzes, wenigstens in einem Pulsrahmen zur Anforderung ein Bit bestimmter Polarität an die Verteilerschaltung senden, sofern sie während wenigstens eines vorangegangenen Pulsrahmens in keinem der Zeitabschnitte des bestimmten Zeitkanalfachs ein von der Verteilerschaltung ausgehendes Bit dieser Polarität festgestellt haben, daß die Verteilerschaltung eine Sendeerlaubnis in der Form erlaubt, daß sie an sie gelangende Anforderungsbits in bestimmter Reihenfolge in den jeweils selben Zeitschlitzen des nachfolgenden Pulsrahmens in umgekehrter Übertragungsrichtung an sämtliche der angeschlossenen peripheren Einheiten zurücksendet, wo sie in der genannten Weise vor Abgabe von Anforderungsbits berücksichtigt werden, daß periphere Einheiten, die Anforderungsbits abgegeben haben mit dem Aussenden von Informationen an die Verteilerschaltung auf der Informationsmultiplexleitung und damit der Abgabe des den Sendezustand kennzeichnenden Signals an die Signalmultiplexleitung dann beginnen, wenn wenigstens ein Zeitrahmen verstrichen ist, in dem nur in dem ihnen jeweils fest zugeordneten Zeitabschnitt des bestimmten Zeitschitzes ein rückgesendetes Anforderungsbit aufgetreten ist.

Bei einer ersten Ausführungsform der Erfindung ist die genannte bestimmte Reihenfolge der Rücksendung von den Anforderungsbits entsprechenden Bits durch die Verteilerschaltung, d. h. die Priorisierung bei gleichzeitig vorhandenen Anforderungen, die Reihenfolge des Eintreffens der Anforderungsbits bei der Verteilerschaltung während des gerade aktuellen Pulsrahmens.

Bei einer anderen Ausführungsform ist die genannte bestimmte Reihenfolge die Reihenfolge des erstmaligen Eintreffens der Anforderungsbits bei der Vermittlungsstelle, d. h. die peripheren Einheiten werden entsprechend ihrer Wartezeit berücksichtigt.

Gemäß einer Weiterbildung der Erfindung werden Signalisier- und Steuerinformationen, die zwischen den peripheren Baueinheiten und der Verteilerschaltung auszutauschen sind, abgesehen von dem genannten den Übertragungszustand auf der Informationsmultiplexleitung kennzeichnenden Signal, das auf der erwähnten Steuermultiplexleitung übertragen wird, auf der Informationsmultiplexleitung in dem bestimmten Zeitkanal übertragen, der ggf. auch für die Übertragung der Anforderungsbits und der entsprechenden in Gegenrichtung ausgesendeten Bits mit ausgenutzt wird.

Nachstehend wird die Erfindung anhand eines Aufführungsbeispiels unter Bezugnahme auf eine Zeichnung näher erläutert.

In der Zeichnung zeigen :

Fig. 1 die schematische Darstellung einer Anordnung zur Durchführung des erfindungsgemäßen Verfahrens,

Fig. 2 ein Zustandsdiagramm, das aus der Sicht einer einzelnen peripheren Baueinheit die einzelnen Betriebszustände bei der Anforderung und Zuteilung der Informationsmultiplexleitung und der Informationsübertragung auf derselben anhand der dabei gesendeten und empfangenden Kennzeichen veranschaulicht.

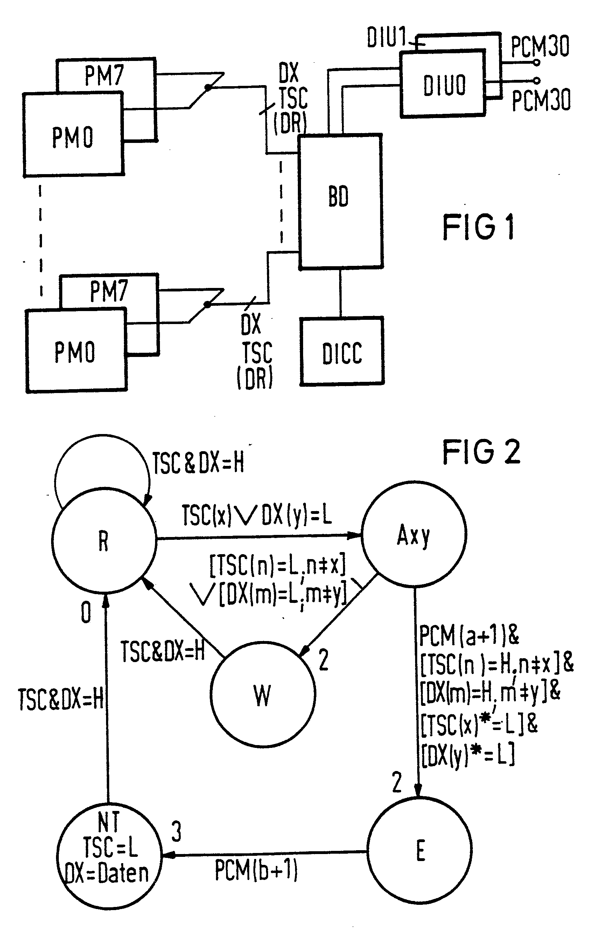

Bei der Anordnung gemäß Fig. 1 sind mehrere Gruppen von peripheren Baueinheiten PM0 bis PM7 gebildet.

Bei diesen peripheren Baueinheiten kann es sich im Falle eines dienstintegrierten Zeitmultiplexfernmeldenetzes um Anschlußeinheiten handeln, an die jeweils eine Mehrzahl von Teilnehmeranschlußleitungen angeschlossen ist, die eine Verbindung mit Teilnehmerstationen herstellen, die u. a. paketorientierte Informationen für die Signalisierung im System und die Nachrichtenübertragung in einem Paketnetz liefern.

Die Gruppen von peripheren Baueinheiten PM0 bis PM7 sind jeweils über eine Informationsmultiplexleitung DX und eine Steuermultiplexleitung TSC mit einer Verteilerschaltung BD verbunden.

Auf der letztgenannten Multiplexleitung treten Signale auf, die eine Angabe darüber liefern, ob die auf der Informationsmultiplexleitung gebildeten Zeitschlitze belegt sind oder nicht.

Außer der genannten Steuermultiplexleitung TSC können eine oder mehrere weitere Multiplexleitungen zwischen den Gruppen von peripheren Baueinheiten und der Verteilerschaltung liegen, auf denen beispielsweise im Zusammenhang mit Überwachungsaufgaben Informationen ausgetauscht werden.

Die Verteilerschaltung BD hat die Aufgabe, die Informationen, die die peripheren Baueinheiten abgeben, auf eine PCM-Zeitmultiplexleitung, die mit der Vermittlungsstelle eines Zeitmultiplex-Fernmeldenetzes eine Verbindung herstellt, zu konzentrieren bzw. auf dieser PCM-Zeitmultiplexleitung von der Vermittlungsstelle kommende Informationen an die peripheren Baueinheiten zu verteilen. Die Verbindung zwischen der Verteilerschaltung BD und wenigstens zwei solcher PCM-Zeitmultiplexleitungen PCM30 erfolgt über eine gedoppelte Schnittstelleneinheit DIUO und DIU1.

Die Verteilerschaltung BD steht unter dem Einfluß einer Steuerung DICC.

Unter weiterer Bezugnahme auf die Fig. 2 werden nun die Vorgänge erläutert, die sich bei der Durchführung des erfindungsgemäßen Verfahrens im einzelnen abspielen.

In der Fig. 2 veranschaulichen die mit R, A, E, NT und W bezeichneten Kreise die möglichen Betriebszustände einer peripheren Baueinheit, wobei im einzelnen bedeuten R = Ruhe ; Axy = Anforderung durch eine periphere Baueinheit, der die Zeitabschnitte xy zugeordnet sind, E = Sendeerlaubnis, NT = Nachrichtentransfer und W = Wartezustand.

Neben den Pfeilen, die die einzelnen Kreise miteinander verbinden, stehen Verknüpfungsbedingungen, die erfüllt sein müssen, damit sich derjenige neue Zustand einstellen kann, auf den der betreffende Pfeil hinweist. Dort ist auch die weitere Bedingung angegeben, daß zeitlich der jeweils auf das Erreichen eines Zustandes folgende Pulsrahmen PCM(a + 1) bzw. PCM(b + 1) vorliegt. Die an den Pfeilspitzen befindlichen eingekreisten Zahlen geben demnach den Pulsrahmen an, in dem ausgehend vom Zustand « Ruhe » im Pulsrahmen O der jeweilige Zustand erreicht wird. Die Bezeichnungen TSC und DX in den Verknüpfungsbedingungen oder Zustandsbescheibungen weisen auf ein Signal auf der Signalmultiplexleitung TSC oder auf der Informationsmultiplexleitung DX hin, das für alle Bitzeitspannen eines Nachrichtenzeitkanalfachs gleich ist. Die Bezeichnung (TSC(n), DX(m) bzw. TSC(x) und DX(y) weisen auf das Bit n oder x in einem bestimmten Zeitkanalfach auf der Signalmultiplexleitung TSC bzw. auf das Bit m oder y auf der Informationsmultiplexleitung DX hin. Sofern eine der genannten Bezeichnungen mit einem Stern bezeichnet ist, bedeutet dies, daß das betreffende Signal von der Verteilerschaltung ausgeht, andernfalls handelt es sich um ein Signal, das die periphere Baueinheit an die Verteilerschaltung sendet.

Wenn im Ruhezustand der betreffenden peripheren Baueinheit die Verknüpfungsbedingungen $\overline{\text{TSC}}$ & $\overline{\text{DX}}$ = 1 erfüllt ist, d. h. also an sämtlichen Bitpositionen eines bestimmten Zeitkanalfachs, beispielsweise des Zeitkanalfachs 16 der Pulsrahmen sowohl auf der Signalmultiplexleitung als auch auf der Informationsmultiplexleitung High-Potential herrscht, ist das ein Zeichen dafür, daß derzeit keine Anforderungen von einer der an die Verteilerschaltung BD angeschlossenen peripheren Baueinheiten PM vorliegt. Wenn dieser Zustand über mindestens einen Pulsrahmen hinweg angedauert hat, kann eine periphere Baueinheit der sowohl in dem bestimmten Zeitkanalfach auf der Steuermultiplexleitung als auch auf der Informationsmultiplexleitung ein bestimmter Zeitabschnitt z. B x bzw. y zugeordnet ist, zur Anforderung in diesen Zeitabschnitten ein Anforderungssignal absetzen, indem sie das Potential in diesen Zeitabschnitten auf den beiden Übergragungsleitungen im nachfolgenden Pulsrahmen auf Low legt. Damit ist im nachfolgenden Pulsrahmen der Anforderungszustand Axy erreicht. Wie schon angedeutet, kann es bei kleinerer Anzahl von peripheren Baueinheiten genügen, den peripheren Baueinheiten nur einen Zeitabschnitt in dem bestimmten Zeitkanalschlitz auf der Steuermultiplexleitung ISC anzuordnen.

Die Verteilerschaltung BD bewertet bei ihr eintreffende Anforderungen entweder entsprechend der Reihenfolge ihres Eintreffens im jeweils aktuellen Pulsrahmen oder aber in der Reihenfolge ihres erstmaligen Eintreffens und trifft danach eine Auswahl. Eine dementsprechende erteilte Sendeerlaubnis für periphere Baueinheiten wird dann in der Form erteilt, daß die Anforderungsbits derjenigen peripheren Baueinheiten, die eine Sendeerlaubnis erteilt bekommen sollen, an alle peripheren Baueinheiten in dem Zeitabschnitt zurückgesendet werden, in dem sie angekommen sind.

Wenn nun eine bestimmte periphere Baueinheit feststellt, daß in wenigstens einer Zeitspanne des bestimmten Zeitkanalfachs der Steuermultiplexleitung oder auf der Informationsmultiplexleitung, das ihr nicht zugeordnet ist, Low-Potential auftritt, dann bedeutet dies, daß mit einer Informationsaussendung noch nicht begonnen werden kann, es wird also der Wartezustand einenommen, siehe W in Fig. 2 und die Verknüpfungsbedingung an dem Verbindungspfeil zwischen A und W. Die Wartebedingung kommt obwohl die betrachtete periphere Baueinheit vor der Aussendung eines Anforderungsbits sich vergewissert hat, daß derzeit keine weitere Anforderungen vorliegen, dann zustande, wenn eine weitere periphere Baueinheit zur gleichen Zeit mit der Aussendung von Anforderungsbits beginnt.

Bei der betrachteten peripheren Baueinheit wiederholen sich nun die im Zusammenhang mit einer Anforderung geschilderten Vorgänge. Wenn die periphere Baueinheit im Anschluß an die Abgabe einer Anforderung wenigstens in einem Pulsrahmen festgestellt hat, daß lediglich in den ihr zugeordneten Zeitabschnitten ein dem Anforderungsbit entsprechendes Bit auftritt dann bedeutet dies, daß keine gleichzeitige Anforderung vorgelegen hat und damit auch die Sendeerlaubnis gegeben ist, siehe hierzu die an dem die Zustandskreise Axy und E verbindenden Pfeil stehende Verknüpfungsbedingung.

Im nachfolgenden Pulsrahmen beginnt daher die periphere Baueinheit mit der Informationsübertragung in einem ihr zugeteilten Zeitschlitz bzw., sofern es sich um Steuer- und Signalisierinformationen handelt, in dem bestimmten Zeitschlitz, in welchem Fall solange die Informationsübertragung dauert auf der Steuermultiplexleitung. während der jeweils in Anspruch genommenen Zeitspannen über die gesamte Dauer der Informationsübertragung hinweg Low-Potential liegt.

Beim Übergang in den Ruhezustand nach Beendigung der Informationsübertragung tritt in den letztgenannten Zeitspannen wieder High-Potential auf.

## Patentansprüche

1. Verfahren zur Verkehrskonzentrierung von paketorientierten Informationen und Signalisierungsinformationen auf eine mit einer digitalen Zeitmultiplex-Vermittlungsstelle eines digitalen, insbesondere dienstintegrierten Zeitmultiplex-Fernmeldenetzes verbindende PCM-Zeitmultiplexleitung (PCM 30), die von vorwiegend gruppenweise über jeweils eine Informationsmultiplexleitung (DX) und jeweils wenigstens eine Steuermultiplexleitung (TSC) an eine Verteilerschaltung (BD) angeschlossenen peripheren Baueinheiten (PMO bis PM7) geliefert werden, wobei jeweils für die Dauer einer Informationsübertragung in einem Zeitschlitz auf der Informationsmultiplexleitung (DX) auf der Steuermultiplexleitung (TSC) im selben Zeitschlitz ein diesen Zustand kennzeichnendes Signal auftritt, dadurch gekennzeichnet, daß die peripheren Baueinheiten (PM) im Falle eines Sendewunsches in einem ihnen jeweils zugeordneten Zeitabschnitt (x) eines bestimmten Zeitschlitzes (z. B. 16) auf der Steuermultiplexleitung (TSC) oder auf der Informationsmultiplexleitung (DC) oder sowohl auf der Steuermultiplexleitung als auch auf der Informationsmultiplexleitung, dort allerdings nicht notwendigerweise im selben Zeitabschnitt des bestimmten Zeitschlitzes wenigstens in einem Pulsrahmen zur Anforderung ein Bit bestimmter Polarität an die Verteilerschaltung (BD) senden, sofern sie während wenigstens eines vorangegangenen Pulsrahmens in keinem der Zeitabschnitte (n, m) des bestimmten Zeitkanalfachs ein von der Verteilerschaltung (BD) ausgehendes Bit dieser Polarität festgestellt haben, daß die Verteilerschaltung (BD) eine Sendeerlaubnis in der Form erteilt, daß sie an sie gelangende Anforderungsbits in bestimmter Reihenfolge in den jeweils selben Zeitschlitzen des nachfolgenden Pulsrahmens in umgekehrter Übertragungsrichtung an sämtliche der angeschlossenen peripheren Einheiten (PM) zurücksendet, wo sie in der genannten Weise vor Abgabe von Anforderungsbits berücksichtigt werden, daß periphere Einheiten (PM), die Anforderungsbits abgegeben haben, mit dem Aussenden von Informationen an die Verteilerschaltung (BD) auf der Informationsmultiplexleitung (DX) und damit der Abgabe des Sendezustand kennzeichnenden Signals an diesen Steuermultiplexleitung (TSC) dann beginnen, wenn wenigstens ein Pulsrahmen verstrichen ist, in dem nur in dem ihnen jeweils fest zugeordneten Zeitabschnitt (xy) ein rückgesendetes Anforderungsbit aufgetreten ist.

2. Verfahren nach Anspruch 1, dadurch gekennzeichnet, daß die bestimmte Reihenfolge der Rücksendung von den Anforderungsbits entsprechenden Bits durch die Verteilerschaltung (BD) die Reihenfolge des Eintreffens der Anforderungsbits bei der Verteilerschaltung während des gerade aktuellen Pulsrahmens ist.

3. Verfahren nach Anspruch 1, dadurch gekennzeichnet, daß die bestimmte Reihenfolge der Rücksendung von den Anforderungsbits entsprechenden Bits durch die Verteilerschaltung (BD) die Reihenfolge ihres erstmaligen Eintreffens bei der Verteilerschaltung ist.

4. Verfahren nach einem der vorhergehenden Ansprüche, dadurch gekennzeichnet, daß die zwischen den peripheren Baueinheiten (PM) und der Verteilerschaltung ausgetauschten Signalisierinformationen und, abgesehen von dem genannten entsprechend dem Übertragungszustand auf der Informationsmultiplexleitung (DX) auf der Steuermultiplexleitung (TSC) auftretenden Signal auf der Informationsmultiplexleitung (DX) in dem genannten bestimmten Zeitschlitz (16) übertragen werden.

5. Verfahren nach einem der Ansprüche 1 bis 4, dadurch gekennzeichnet, daß zur Übertragung zusammengehörender Informationen jeweils mehrere Zeitschlitze zugeteilt werden.

**Claims**

1. A method for the traffic concentration of packet-switched information and signalling information on to a PCM t.d.m. line (PCM30) which establishes a connection to a digital t.d.m. switching exchange of a digital, in particular ISDN t.d.m. telecommunications network, where said information and signalling information is supplied by peripheral modules (PM0 to PM7) which are mainly connected in groups via a respective information multiplex line (DX) and a respective minimum of one control multiplex line (TSC) to a distributor circuit (BD), and where for the duration of an information transmission in a time slot on the information multiplex line (DX), a signal identifying this state occurs in the same time slot on the control multiplex line (TSC), characterised in that the peripheral modules (PM), in the event of a transmission request in a respective assigned time section (x) of a specified time slot (e. g. 16) on the control multiplex line (TSC) or on the information multiplex line (DC) or both on the control multiplex line and on the information multiplex line, although in the latter case not necessarily in the same time section of the specified time slot, at least in one pulse frame transmit a request bit of a specified polarity to the distributor circuit (BD) provided they have established no bit of this polarity, supplied by the distributor circuit (BD) in any of the time sections (n, m) of the specified time channel slot during at least one preceding pulse frame, that the distributor circuit (BD) grants permission to transmit in the form that it returns request bits, with which it is supplied, in a specified sequence in the respective same time slots of the following pulse frame in the reverse transmission direction to all the connected peripheral modules (PM) in which they are taken into consideration in the described manner prior to the emission of request bits, that peripheral modules (PM) which have emitted request bits commence transmission of information to the distributor circuit (BD) on the information multiplex line (DX), and thus commence the emission of the signal characterising the transmitting state to this control multiplex line (TSC) when at least one pulse frame has passed in which a returned request bit has occurred only in the respective time section (xy) which they are permanently assigned.

2. A method as claimed in claim 1, characterised in that the specific sequence of the return transmission of bits corresponding to the request bits by the distributor circuit (BD) is the sequence of the arrival of the request bits in the distributor circuit during the current pulse frame.

3. A method as claimed in claim 1, characterised in that the specified sequence of the return transmission of bits corresponding to the request bits by the distributor circuit (BD) is the sequence of their first arrival in the distributor circuit.

4. A method as claimed in one of the preceding claims, characterised in that the items of signalling information which are exchanged between the peripheral modules (PM) and the distributor circuit, apart from the aforementioned signal which occurs on the control multiplex line (TSC) in accordance with the transmission state on the information multiplex line (DX), are transmitted on the information multiplex line (DX) in the aforementioned specified time slot (16).

5. A method as claimed in one of the claims 1 to 4, characterised in that a plurality of time slots are in each case allocated for the transmission of associated information items.

**Revendications**

1. Procédé pour la concentration du trafic d'informations groupés en paquets et d'informations de signalisation sur une ligne à multiplexage temporel PCM (PCM30) réalisant la liaison avec un central numérique de commutation à multiplexage temporel d'un réseau de télécommunication numérique, en particulier à intégration de services, informations qui sont fournies par des unités périphériques (PM0 à PM7) qui sont raccordées principalement par groupes et à travers chaque fois une ligne à multiplexage d'informations (DX) et chaque fois au moins une ligne à multiplexage de commandes (TSC) à un circuit répartiteur (BD), avec apparition, pour la durée d'une transmission d'information dans une tranche de temps sur la ligne à multiplexage d'informations (DX), d'un signal caractérisant cet état, dans la même tranche de temps, sur la ligne à multiplexage de commandes (TSC), caractérisé en ce que les unités périphériques (PM), dans le cas d'un désir d'émission, émettent vers le circuit répartiteur (BD), dans un intervalle de temps (x) qui leur est coordonné individuellement d'une tranche de temps déterminée (16 par exemple), sur la ligne à multiplexage d'informations (DC), ou à la fois sur la ligne à multiplexage de commandes et sur la ligne à multiplexage d'informations, mais alors pas obligatoirement dans le même intervalle de temps de la tranche de temps déterminée, dans au moins une trame, en vue de la demande d'un bit de polarité déterminée, à condition qu'elles n'aient constaté, pendant au moins une trame précédente, dans aucun des intervalles de temps (n, m) de la voie de transmission temporelle déterminée, un bit de cette polarité provenant du circuit répartiteur (BD), que le circuit répartiteur (BD) délivre une autorisation d'émettre sous une forme qui consiste à renvoyer à toutes les unités périphériques (PM) raccordées les bits de demande qui lui parviennent, dans un ordre de succession déterminé, chaque fois dans les mêmes tranches de temps de la trame suivante et dans la direction de transmission inverse, unités périphériques où il est tenu compte de ce renvoi de bits de la manière mentionnée avant la délivrance de bits de demande, et que les unités périphériques (PM) qui ont délivré des bits de demande, commencent à émettre des informations vers le circuit répartiteur (BD) sur la ligne à multiplexage d'informations (DX) et, par suite, à délivrer le signal caractérisant l'état d'émission à la ligne à multiplexage de commandes (TSC) lorsqu'au moins une trame s'est écoulée dans laquelle un bit de demande retourné est apparu seulement dans l'intervalle de temps (xy) qui leur est coordonné individuellement de façon fixe de la tranche de temps déterminée.

2. Procédé selon la revendication 1, caractérisé en ce que l'ordre de succession déterminé de l'envoi en retour de bits correspondant aux bits de demande, par le circuit répartiteur (BD), est l'ordre de succession de l'arrivée des bits de demande au circuit répartiteur pendant la trame actuelle.

3. Procédé selon la revendication 1, caractérisé en ce que l'ordre de succession déterminé de l'envoi en retour de bits correspondant aux bits de demande, par le circuit répartiteur (BD), est l'ordre de succession de leur première arrivée au circuit répartiteur.

4. Procédé selon une des revendications précédentes, caractérisé en ce que les informations de signalisation échangées entre les unités périphériques (PM) et le circuit répartiteur, sont transmises sur la ligne à multiplexage d'informations (DX), dans la tranche de temps déterminée (16) mentionnée, exception faite dudit signal apparaissant sur la ligne à multiplexage de commandes (TSC) conformément à l'état de transmission sur la ligne à multiplexage d'informations (DX).

5. Procédé selon une des revendications 1 à 4, caractérisé en ce que plusieurs tranches de temps sont attribuées pour la transmission d'informations qui vont ensemble.

FIG 1

FIG 2